# EUROPEAN PATENT APPLICATION

(11) **EP 3 190 001 A1**
(43) Date of publication of application: **12.07.2017**
(21) Application number: 16150378.4
(22) Date of filing: 07.01.2016
(51) Int. Cl.: B60N 2/28

(54) **MOUNTING DEVICE FOR A VEHICLE-MOUNTED CHILD SAFETY SEAT**

(71) Applicant: Apramo UK Limited, Tamworth B78 3HL (GB)
(72) Inventor: Meng, Zusheng, Ningbo 315103 (CN)
(74) Representative: Aldridge, Christopher Simon

(57) **Abstract**

A fastening device used for child safety seat comprises: a base 1 fixedly connected to a car seat, and a support 2 located above the base and connected with the base; said support 2 is connected with a seat section of the safety seat, wherein said support 1 is capable of horizontally rotating with respect to the base 1 so as to adjust the front-rear orientation of the seat section of said safety seat, and a locking device for locking the relative position of the support with respect to the base is provided between said base and the support. The fastening device used for child safety seat not only can be connected to an ISOFIX joint on the vehicle via an ISOFIX joint, but also can adjust the front and rear position of the safety seat with respect to the car seat; also, the seat section can easily be rotated front and rear and be locked, thus, in order to switch between the regular mounting manner and the converse mounting manner, the safety seat don't have to be entirely detached and simply have to perform a few operations to finish the switch; moreover, it is convenient and practical, and can be manipulated without exerting great effort.

## Description

### Field of the Invention

The present invention relates to a mounting device, and specifically to a mounting device used for vehicle-mounted child safety seats.

### Description of the Related Art

A vehicle-mounted child safety seat is a safety device that is specially designed for children in different age groups or with different figures, which is mounted within a vehicle and can effectively improve child's safety during riding a car. In case a car crash happens or a car abruptly decelerates, the impact force imposed on the children will be reduced, and the body movements of the children will be restricted in order to reduce the damages that may happen to the children.

A common vehicle-mounted child safety seat includes a base, a seat body and a headrest located on the top of the seat body. However, most of the commercially available vehicle-mounted child safety seats are mounted on the vehicle by means of a seat belt. For example, Chinese patent application CN103507677A discloses a vehicle-mounted safety seat structure that is mounted by means of seat belt. Such mounting manner has a major disadvantage that the mounting procedure is too complex that many users do not know how to mount or cannot mount it properly, thus presenting a potential danger to the child occupant of the safety seat.

Further, when the children are young enough, it may be preferred that the child safety seat is mounted appropriately so that a child can lie down. However, when children grow up, the child safety seat must be regularly mounted in a more upright. Therefore, it is desirable to be able to switch between the regular mounting manner and the converse mounting manner. However, with existing systems, normally, the safety seat must be entirely detached and then be mounted again, which is very inconvenient.

### Summary of the present invention

A problem sought to be solved by the present invention is to provide a mounting device used for mounting a child safety seat in a vehicle that is easy to switch between a regular mounting manner and a converse mounting manner and can be firmly mounted.

Accordingly, the present invention is directed to a child safety seat mounting device comprising a base and a support, wherein the support is rotatably mounted upon the base via a locking mechanism, characterized in that the locking mechanism comprises:
a connecting part;
a connecting plate arranged to rotate coaxially around the connection part; and
a latch hook;
wherein the connecting plate is provided with an opening on its perimeter and the latch hook is arranged to releasably engage the opening in the connection plate.

The use of a connection plate that extends radially about the axis of rotation allows the latch hook to be retained in the disengaged position until the latch hook is aligned with an opening in the connection plate. The latch hook presses against the plate until it is able to engage the opening in the connection plate and this prevents the latch hook from holding the seat in an undesirable position. Instead, the seat can be rotated to predetermined positions.

Advantageously, the connection part is part of the base and extends upwardly therefrom and the connecting plate is part of the support. This allows for a convenient arrangement with the base being used as the pivot, or axis, about which the connecting plate can rotate.

It is preferable that a locking device is positioned between the base and the support, the latch hook being mounted on the locking device and biasing means being provided to bias the latch hook in the locked position.

In one arrangement, the support comprises locking holes arranged to receive the latch hook when the latch hook engages the connecting plate. By having the latch hook engage both the connecting plate and the support at the same time, the locking mechanism is more secure and the car seat mounted to the support is less likely to rotate when note required to do so.

Preferably, a first end of a wire is connected to the latch hook and a second end of the wire is connected to a handle that is mounted on the base. The use of the wire allows a handle to be provided in the base that can be used to operate the locking mechanism. The handle requires an active operation from the user and is less likely to be accidentally operated than other mechanisms, such as a button.

In an advantageous construction, the base is further provided with a T-shaped coupling bar, wherein the leg of the T-shaped coupling bar is partially received within a sleeve and is releasably retained therein by a pivotally mounted locking head that is biased to engage one of a plurality of teeth in the leg of the T-shaped coupling bar such that the position of the cross bar of the T-shaped coupling bar relative to the base is adjustable.

In such an arrangement, it may be desirable that each end of the cross bar of the T-shaped coupling bar is provided with a respective ISOFIX joint and the pivotally mounted locking head is connected to a drawstring such that force on the drawstring can disengage the pivotally mounted locking head from the teeth. Having an adjustable T-shaped bar with ISOFIX mounts allows the position of the seat relative to the ISOFIX connection to be adjusted. Additionally, the use of a draw string, which may be in the form of a wire, a shaft or other material, allows the locking head to be readily disengaged to adjust the position of the T-shaped coupling bar relative to the base.

Preferably, a connecting part extending upwardly is provided on said base; said support comprises a strip-shaped connecting portion that is connected with the seat section of the safety seat; said connecting portion is engaged on said connecting part and is capable of rotating around the connecting part.

Preferably, said connecting portion is provided with two locking holes separately arranged along a front-rear direction; the locking holes are separately located on front side and rear side of the connecting part and equally distant from the connecting part; said locking device comprises a connecting stand fixedly connected with said base and extending vertically, and a coupling shaft connected to the connecting stand and extending transversely; said coupling shaft is hinged with a latch hook; a torsional spring is provided between said coupling shaft and the latch hook; said torsional spring forces said latch hook to have a tendency of being always upwardly inserted into the locking holes; said latch hook is inserted into the locking holes to lock the position of said support relative to the locking device; said latch hook is driven by a latch hook driving structure and thus can overcome the torque force of the torsional spring to deflect and get detached from the locking holes.

In order to facilitate the rotation of the seat section, said support further comprises a transversely extending connection plate located below the connecting portion and fixedly connected with the connecting portion; said connection plate downwardly presses the latch hook during the rotation of the support after the latch hook is unlocked; said connection plate has openings that are matched with the locking holes.

In order to facilitate unlocking, said latch hook driving structure comprises a steel wire rope fixedly connected onto the latch hook; said steel wire rope extends forward and is connected to a handle located at the front end of the base; said handle is pulled so that said latch hook will rotate around the coupling shaft so as to be disengaged from the locking holes.

In order to realize the front-rear adjustment of the seat, said base comprises an outer sleeve; said connecting part is fixedly installed at the rear end of said outer sleeve; and said outer sleeve is fixedly connected with said locking device; an inner sleeve that can move back and forth with respect to said outer sleeve is inserted in said outer sleeve; the rear end of said inner sleeve extends outside the outer sleeve and is fixedly connected with an ISOFIX joint; left side face and right side face of said outer sleeve are provided with a slideway extending along the length direction; the bottom of the slideway is provided with multiple skew tooth separately arranged along its length direction; said skew tooth gradually inclines upwards from back to the front; the front end of said inner sleeve is hinged with a locking head that can turn over upside down; said locking head is provided with a locating shaft that extends along left-right direction and extends into said slideway.

In a state that the locking head deflects downwards, said locating shaft is snapped into the bottom of said skew tooth so as to lock the relative position of the inner sleeve with respect to the outer sleeve; in a state that the locking head deflects upwards, said locating shaft is detached from said skew tooth so that said inner sleeve will shift with respect to the outer sleeve.

In order to facilitate the operations, said inner sleeve is provided with a resilient member that forces the locking head to maintain a bias towards a downward deflection; said locking head is connected with a drawstring that can bring the locking head to deflect upwards; the rear end of said drawstring extends outside said outer sleeve.

Preferably, said locking head further comprises connecting portions that are located at both ends of the locating shaft and extend with the drawstring along in the same direction; said connecting portions are located at both sides of said inner sleeve and are hinged with the inner sleeve via an axis that is substantially perpendicular to the inner sleeve and extends transversely; said locating shaft is closer to the front end of said inner sleeve than said axis.

In order to facilitate the connection, a locating sleeve is provided between said locking head and said inner sleeve; said locating sleeve is fixed to the front end of said inner sleeve, and is provided on both sides with arched grooves matched with and hinged with the connecting piece.

Preferably, said resilient member is a restoring torsion spring; said restoring torsion spring is engaged on said axis; said drawstring is located between said inner sleeve and the outer sleeve, and is arranged above said inner sleeve.

Preferably, the rear end of said inner sleeve is mounted with a coupling bar that is perpendicular to said inner sleeve and extends transversely; a middle portion of the coupling bar is fixed to the rear end of the inner sleeve, and both ends of the coupling bar are each respectively provided with an ISOFIX joint.

Compared with the prior art, the present invention has advantages, for example as follows: the mounting device used for child safety seat not only can be connected to an ISOFIX joint on the vehicle via an ISOFIX joint, but also can adjust the front and rear position of the safety seat with respect to the car seat; also, the seat section can easily be rotated front and rear and be locked, thus, in order to switch between the regular mounting manner and the converse mounting manner, the safety seat does not have to be entirely detached and it simply has to perform a few operations to enact the switch between positions; moreover, it is convenient and practical, and can be manipulated without exerting great effort.

### Brief Description of the Drawings

Figure 1 is a perspective view of a mounting device used for a child safety seat in accordance with the present invention;
Figure 2 is a diagram showing a state of switching the mounting device used for child safety seat of the embodiment of the present invention between a regular mounting manner and a converse mounting manner;
Figure 3 is a sectional view of Figure 1 along line A-A;
Figure 4 is an exploded view of the mounting device used for child safety seat of the embodiment of the present invention;
Figure 5 is an exploded view of the base of the mounting device used for child safety seat of the embodiment of the present invention;
Figure 6a is a diagram showing a locked state of the base of the mounting device used for vehicle-mounted child safety seat of the embodiment of the present invention; and
Figure 6b is a diagram showing an unlocked state of the base of mounting device used for vehicle-mounted child safety seat of the embodiment of the present invention.

### Detailed Description of the Preferred Embodiments

In the following, the present invention is further described with reference to the figures and embodiments.

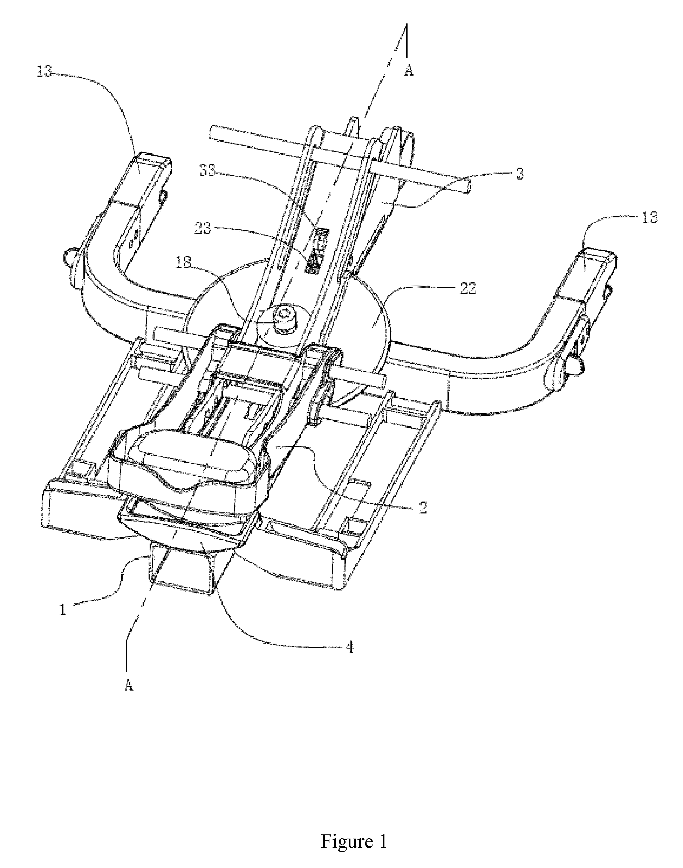

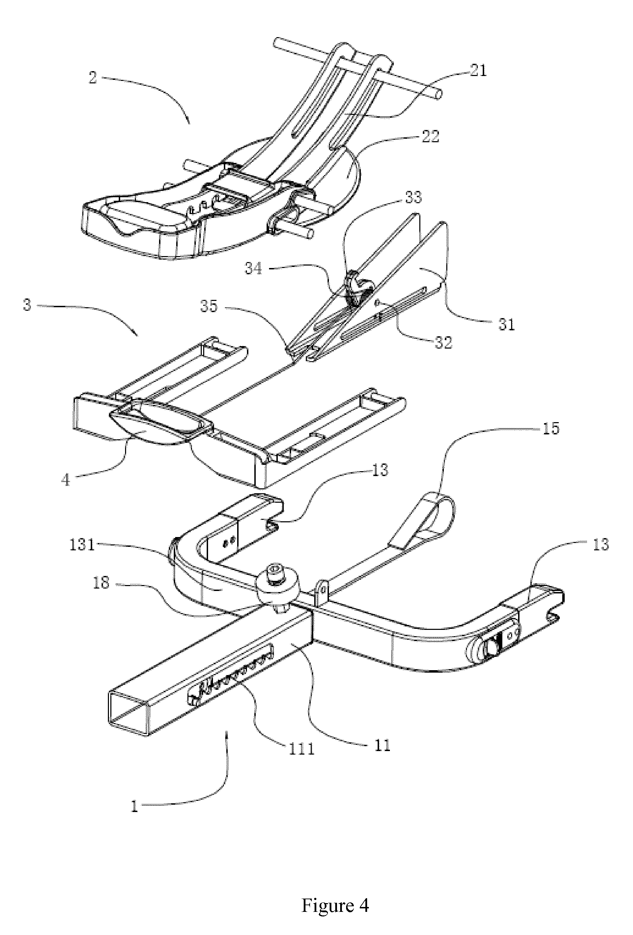

As shown in Figures 1-4, according to an embodiment of the present invention, the mounting device used for child safety seat comprises a base 1 (the base 1 is used to be fixedly connected to a car seat) and a support 2 that is connected with the base. Said support 2 is connected with the bottom of a seat section of the safety seat, and the support 2 is capable of horizontally rotating with respect to the base 1, that is, in an axis substantially perpendicular to the top surface of the base 1.

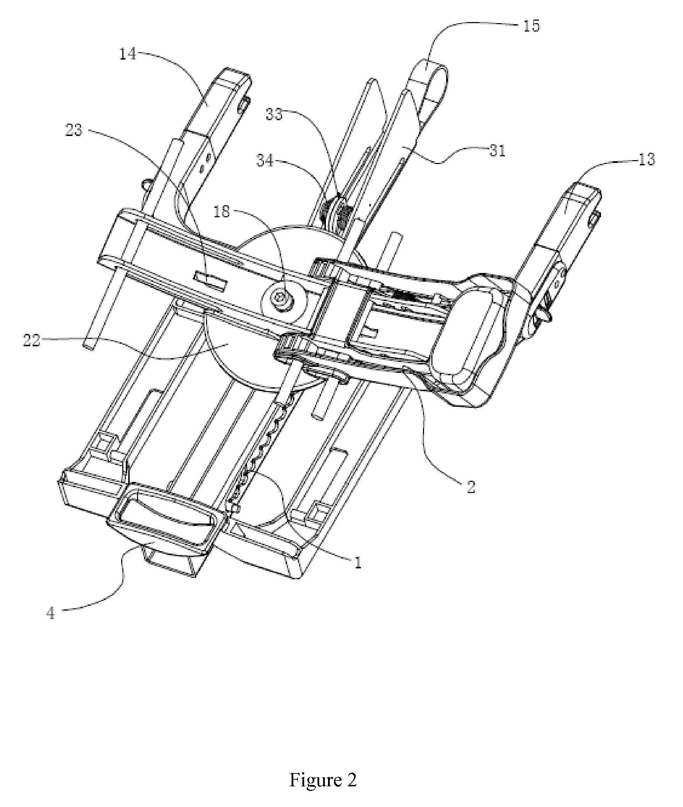

The base 1 is also fixedly provided with a locking device 3 for mutually locking the support 2 and the base 1; and the locking device 3 is provided between said base 1 and the support 2. Said base 1 is provided with a connecting part 18 extending upwardly; the support 2 is mounted upon the connecting part 18 and can rotate horizontally around the axis of the connecting part 18 in a plane that may be substantially horizontal. The support 2 comprises a connecting portion 21 may be fixedly connected to the seat section of the child safety seat, and a disc-shaped (transversely extending) connection plate 22 located below a middle position of the connecting portion 21 along its length. The connecting portion 21 has a U-shaped cross section, thus it is convenient to process. The connection plate 22 is mounted together with the connecting portion 21, and along its length direction, said connecting portion 21 is provided with two separately arranged locking holes 23 with one in front and the other at the back. Also, corresponding positions of the connection plate 22 are also provided with openings corresponding to the locking holes 23. The locking holes 23 are located at both sides of the connecting part 18 and are equally distant from the connecting part 18. Said locking device 3 comprises a connecting stand 31 fixedly connected with said base 1 and extending substantially vertically therefrom, and a coupling shaft 32 retained within the connecting stand 31 and extending transversely. Preferably, there are two connecting stands 31 that are spaced apart and each side (right-left direction) of a central position, and said coupling shaft 32 extends between the two connecting stands 31. A latch hook 33 is received on the coupling shaft 32 and is hinged thereabouts. The hook of said latch hook 33 is upwardly inserted into the locking holes 23 located at the connecting portion 21 to lock the support in place relative to the base 1. A torsional spring 34 is provided between said latch hook 33 and the axis of the coupling shaft 32. The torsional spring 34 biases said latch hook 33 to have a tendency of being always upwardly inserted into the locking holes 23, when the locking holes 23 are correctly aligned therewith. Said latch hook 33 is fixedly connected to a steel wire rope 35. The steel wire rope 35 extends forwards and is connected to a handle 4 located at the front end of the base 1. Thus, the steel wire rope 35 forms a latch hook driving structure, which, when the handle is operated, pulls the latch hook 33 out from the locking holes 23. The handle 4 is pulled so that the latch hook 33 overcomes the torque force of the torsional spring 34 and thus rotates around the coupling shaft 32, enabling the upright hook to disengage from the locking holes 23; thus, the locking between the support 2 and the locking device 3 can be unlocked, so that the support 2 can rotate around the axis of the connecting part 18. As shown in Figure 2, after unlocking, the support 2 can bring the safety seat to rotate 180°; and during the rotation, since the connection plate 22 is disc-shaped (and so extends radially), the connection plate 22 retains the latch hook 33 in a disengaged position. When the rotation reaches 180°, the latch hook 33 will be inserted into another locking hole 23 so as to lock the position of the support 2.

Preferably, the centre of the connection plate 22 is mutually engaged with the connecting part 18, and rotates around the connecting part 18. The connection plate 22 has a round shape with its circle center is engaged onto the connecting part 18, and its peripheral surface is provided with openings matched with the locking holes 23. The openings are apertures or recesses on the perimeter of the connection plate 22. Therefore, when the latch hook 33 is unlocked under the pull of the handle 4, the connection plate 22 and the support 2 as well as the seat section connected with the support rotate, and at this moment, the connection plate 22 can downwardly presses the latch hook 33, so that the support 2 can successfully rotate. The connection plate 22 is not necessarily round, and may be of polygon or ellipse or irregular shape, as long as the support 2 downwardly presses the latch hook 33 during rotation after the latch hook is unlocked.

The base 1 comprises an outer sleeve 11 that is connected with the support 2 and extends along a front-rear direction; that is to say, such connecting part 18 is fixedly connected onto the outer sleeve 11, and said connecting stand 31 is also fixedly connected to said outer sleeve 11, and thus said locking device is fixedly connected with the outer sleeve 11. The base 1 further comprises an inner sleeve component that can displace along the front-rear direction with respect to the outer sleeve 11. The inner sleeve component comprises an inner sleeve 12 that is located inside the outer sleeve 11 and can shift along the front-rear direction with respect to the outer sleeve 11. The front end of the inner sleeve 12 is inserted into the outer sleeve 11. The inner sleeve 12 can displace to the outside of the outer sleeve 11 and it can extend outside of the outer sleeve. The base 1 further comprises an ISOFIX joint 13 that is fixedly mounted to other (outer) end (that is, the rear end) of the inner sleeve 12 and is always exposed from the outer sleeve 11.

The front end of said outer sleeve 11 is located at the bottom of and in front of the safety seat. Said connecting part 18 is located at the rear end of the outer sleeve 11. The inner sleeve 12 is inserted into the outer sleeve 1 from the rear end of the outer sleeve 1. ISOFIX joint 13 is fixedly mounted to the other end of the inner sleeve 12; and there are two ISOFIX joints arranged in parallel and spaced apart, which are respectively used for being mounted within an ISOFIX joint on the vehicle, so as to mount the safety seat onto the seat of the vehicle. Preferably, outer end (that is, the rear end) of said inner sleeve 12 is mounted with a coupling bar 131 that is substantially perpendicular to said inner sleeve and extends transversely, which means that the middle portion of the coupling bar 131 is fixed to the rear end of the inner sleeve 12, and both ends of the coupling bar 131 are each respectively mounted with an ISOFIX joint 13.

A drawstring 15 extends parallel with the inner sleeve 12, and the drawstring 15 is located between the inner sleeve 12 and the outer sleeve 11, which means that the drawstring 15 is also inserted into the outer sleeve 11. The drawstring 15 is located above the inner sleeve 12, and the front end of the drawstring 15 is inserted into the outer sleeve 11. The rear end of the drawstring 15 extends to outside of the outer sleeve 11 and outside of the inner sleeve component.

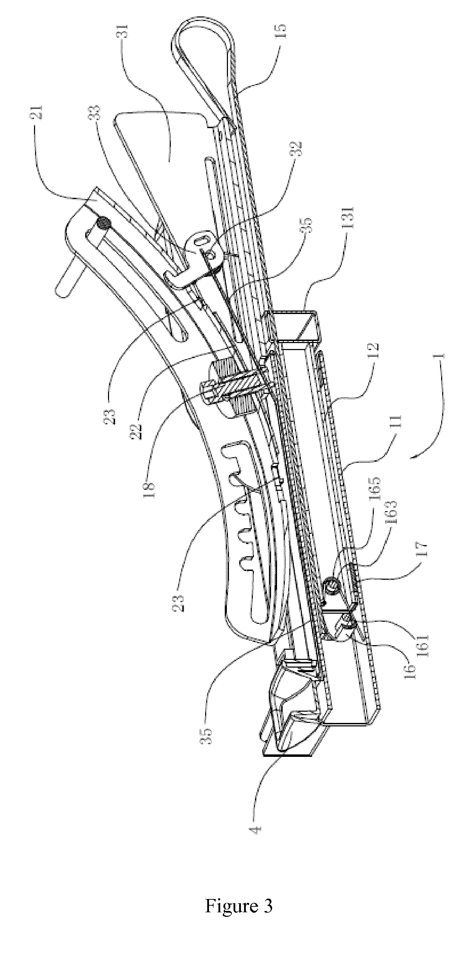

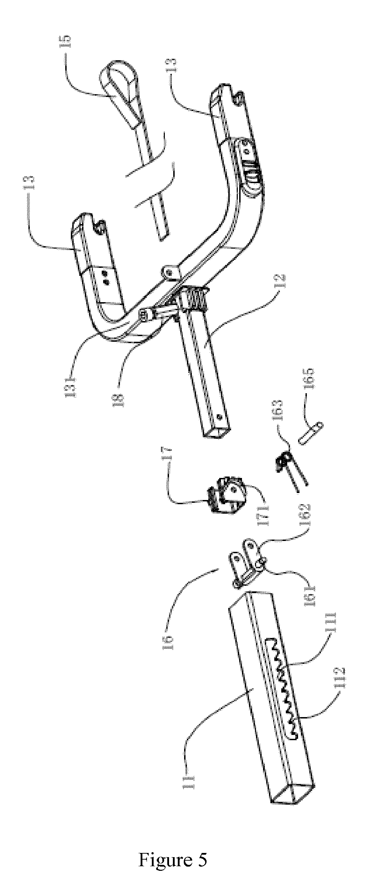

As shown in Figures 3, 4 and 5, a locking head 16 is fixedly connected onto the front end of the drawstring 15. The locking head 16 comprises a locating shaft 161 that is perpendicular to the length direction of the drawstring 15 and extends transversely (which means that said locating shaft 161 extends along left-right direction), and connecting pieces 162 that is located at both ends of the locating shaft 161 and extend with the drawstring 15 along a same direction. Both ends of the locating shaft 161 are mounted on said connecting piece 162, and end of the locating shaft 161 extends to the outside of the connecting piece 162. A locating sleeve 17 is fixedly engaged outside the inner sleeve 12 between the front end of the inner sleeve 12 and the outer sleeve 11. The locating sleeve 17 is located between the locking head 16 and the inner sleeve 12. Both sides of the locating sleeve 17 are respectively provided with an arched groove 171 matched with the connecting piece 162. The connecting piece 162 can be matched with the arched groove 171 and rotates inside the arched groove 171. Also, the connecting piece 162 is hinged with the arched groove 171; i.e. the connecting pieces 162 of both sides of the locking head 16 are hinged on both sides of the inner sleeve 12 via the locating sleeve 17. When the drawstring 15 pulls the locking head 16, the connecting piece 162 can rotate inside the arched groove 171 around the axis 165 upon which it is mounted, and thus the locking head 16 will deflect around its axis 165 in an upward direction. The locating shaft 11 is closer to the front ends of the drawstring 15 and the inner sleeve 12 than the axis 165; that is, the rear ends of said locating shaft 161 and the drawstring 15 are respectively located on front side and rear side of the cardinal axis 165 with which the locking head 16 and the inner sleeve 12 are hinged. Accordingly, the locking head 16, the drawstring 15, the locating sleeve 17 and the inner sleeve 12 are integrally connected as a whole. The axis 165 is also provided with a restoring torsion spring 163, so that the locating shaft 161 has a tendency of keeping downwardly biased when rotating around the axis 165 with which the locking head 16 and the arched groove 171 are hinged. In one arrangement, the locating sleeve 17 can be omitted, as long as the connecting pieces 162 on both sides of the locking head 16 are hinged with the front end of the inner sleeve 12, and the axis 165 is perpendicular to the length direction of the inner sleeve 12 and extends transversely.

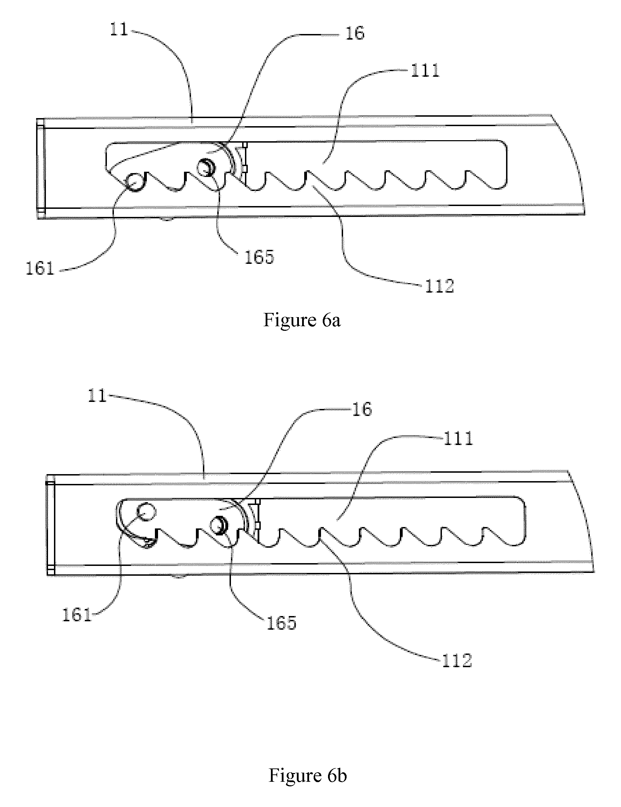

Both side surfaces of the outer sleeve 11 are provided with a slideway 111 extending along its length direction. The locating shaft 161 of the locking head 16 is outwardly inserted into the slideway 111 from both sides. The restoring torsion spring 163 forces the locating shaft 161 to have a tendency of downwardly locating at, or towards the bottom of the slideway 111. The restoring torsion spring 163 may also be other resilient means, as long as said locating shaft 161 has a tendency of being biased downwardly towards, and engaging, the slideway 111. The bottom of the slideway 111 has a tooth profile distributed along the length direction of the slideway 111, and such tooth profile is a skew tooth 112 upwardly inclines towards the front end of the outer sleeve 11. The locating shaft 161 has a tendency of engaging towards, and preferably at, the bottom of the skew tooth 112. As shown in Figure 6a, in a rest state, the locating shaft 161 on the locking head 16 of the front end of the drawstring 15 is biased into the skew tooth 112 at the bottom of the slideway 111, so that relative position of the inner sleeve 12 with respective to the outer sleeve 11 is fixed. When a user pulls the rear end of the drawstring 15, the connecting piece 162 on the front end of the drawstring 15 rotates around the axis 165 upon which it is hinged within the locating sleeve 17, and thus the locating shaft 61 is disengaged from the skew tooth 112 of the slideway 111, as shown in Figure 6b; at this moment, by pulling the drawstring 15, the inner sleeve 12 is forced to slide and shift to the outside with respect to the outer sleeve 11. That is to say, the ISOFIX joint connected at the outer side of the rear end of the inner sleeve 12 can extend outside the bottom of the safety seat, and can be easily mounted to the ISOFIX joint on the vehicle. When the ISOFIX joint at the bottom of the safety seat has been mounted to the locking head on the vehicle, the safety seat is to be pushed, that is, the outer sleeve 11 is can be pushed; since the outer sleeve 11 is provided with the tooth profile that inclines towards its front end, the locating shaft 161 can shift forward along the skew tooth profile, that is, the inner sleeve 12 shifts from the rear end of the outer sleeve 11 towards the front end, thus realizing the adjustment of the position of the safety seat.

The mounting device used for child safety seat not only can be connected to an ISOFIX joint on the vehicle via an ISOFIX joint, but also can adjust the front and rear position of the safety seat with respect to the car seat; also, the seat section can easily be rotated front and rear and be locked, thus, in order to switch between the regular mounting manner and the converse mounting manner, the safety seat does not have to be entirely detached and it simply has to perform a few operations to enact the switch; moreover, it is convenient and practical, and can be manipulated without exerting great effort.

Although some preferred embodiments of the present invention have been described in detail in the above, it is to be understood that, as for a person skilled in the art, modifications and alternatives can be made to the present invention. Any changes, equivalent alternatives, modifications and the like made without departing from the spirit and principle of the present invention also fall within the scope of protection of the present invention.

## Claims

1. A child safety seat mounting device comprising a base (1) and a support (2), wherein the support (2) is rotatably mounted upon the base (1) via a locking mechanism, **characterized in that** the locking mechanism comprises:
a connecting part (18);
a connecting plate (22) arranged to rotate coaxially around the connection part (18); and
a latch hook (33);
wherein the connecting plate (22) is provided with an opening on its perimeter and the latch hook (33) is arranged to releasably engage the opening in the connection plate (22).

2. A child safety seat mounting device according to claim 1, **characterized in that** the connection part (18) is part of the base (1) and extends upwardly therefrom and the connecting plate (22) is part of the support (2).

3. A child safety seat mounting device according to claim 2, **characterized in that** a locking device (3) is positioned between the base (1) and the support (2), the latch hook (33) being mounted on the locking device (3) and biasing means (34) being provided to bias the latch hook (33) in the locked position.

4. A child safety seat mounting device according to claim 2 or claim 3, **characterized in that** the support (2) comprises locking holes (23) arranged to receive the latch hook (33) when the latch hook (33) engages the connecting plate (22).

5. A child safety seat mounting device according to any preceding claim, **characterized in that** a first end of a wire (35) is connected to the latch hook (33) and a second end of the wire (35) is connected to a handle (4) that is mounted on the base (1).

6. A child safety seat mounting device according to any preceding claim, **characterized in that** the base (1) is further provided with a T-shaped coupling bar (13), wherein the leg (12) of the T-shaped coupling bar (13) is partially received within a sleeve (11) and is releasably retained therein by a pivotally mounted locking head (16) that is biased to engage one of a plurality of teeth (112) in the leg (12) of the T-shaped coupling bar (13) such that the position of the cross bar (131) of the T-shaped coupling bar (13) relative to the base (1) is adjustable.

7. A child safety seat mounting device according to claim 6, **characterized in that** each end of the cross bar (131) of the T-shaped coupling bar (13) is provided with a respective ISOFIX joint (13) and the pivotally mounted locking head (16) is connected to a drawstring (15) such that force on the drawstring (15) can disengage the pivotally mounted locking head (16) from the teeth (112).
